# EUROPEAN PATENT APPLICATION

(11) **EP 1 795 998 A1**
(43) Date of publication of application: **13.06.2007**
(21) Application number: 06253875.6
(22) Date of filing: 25.07.2006
(51) Int. Cl.: G06F 3/048

(54) **On-screen display for configuring a display apparatus using graphic icons**

(30) Priority: 08.12.2005 US 299077
(71) Applicant: Syntax Brillian Corp., Tempe AZ 85281 (US)
(72) Inventor: Miller, Samuel, Chino Hills, CA 91709 (US)
(74) Representative: Kenrick, Mark Lloyd

(57) **Abstract**

An on-screen display (OSD) for configuring a television apparatus, computer monitor or the like is disclosed. The OSD uses primarily icons to represent menu items placed near a corner or edge of the screen. The menu icon depicts a three-dimensional polygonal wheel having three visible side faces and three icons representing menu items rendered in a perspective view on the side faces. The menu items can be scrolled in response to a user input. When a menu item is activated, a next-level menu icon is displayed, along with a reduced-size version of the previous-level menu icon. The menu items are logically organized in a menu tree having multiple levels, and a maximum of two levels of menu icons are displayed at any time. Also described is an OSD method using a bar and a current-value indicator to adjust the value of a parameter.

## Description

### BACKGROUND OF THE INVENTION

### Field of the Invention

This invention relates to interactive on-screen display of configuration menus for configuring a television apparatus or computer monitor, and in particular, it relates to an on-screen display that primarily utilizes graphic icons.

### Description of the Related Art

On-screen display ("OSD") is a method widely used in conjunction with front panel controls or remote control devices for setting configuration parameters of television apparatus or computer monitors by users. Configuration menus are displayed on the television or computer screen, often superimposed on the main images of the program being viewed. The configuration menus typically contain alphanumeric text and graphic indications to allow the user to make selections and inputs using front panel controls or a remote control. A problem often associated with OSDs is that each menu page often contains many items of information and occupies a large area on the screen, which interferes with the viewing of the image on screen and changing configuration parameters. Some proposed OSD methods attempt to remedy this problem by making the background of the menu display transparent or semi-transparent. Another problem with some OSDs is that each page contains too much information (many configuration parameters that the user can select and adjust). Additionally, the configuration parameters can change with input source selection (broadcast TV, cable, VCR, DVD player, etc.) which tends to be confusing. Many users feel overwhelmed and intimidated by such display menus, and as a result often forego the configuration process and leave the configuration parameters unadjusted.

### SUMMARY OF THE INVENTION

Accordingly, the present invention is directed to an on-screen display (OSD) method that substantially obviates one or more of the problems due to limitations and disadvantages of the related art.

An object of the present invention is to provide an OSD that is visually simple, easy to see, easy to use, and does not obscure large areas of the screen.

Additional features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, the present invention provides a method for adjusting configuration parameters of a display apparatus using on-screen display, which includes (a) displaying a first-level menu icon on the screen, the first menu icon depicting a three-dimensional wheel having a side face divided into one or more side sections, each side section displaying a menu item, one of the menu items being indicated as a currently selected menu item; (b) in response to a scrolling input, displaying different menu items on the side sections of the wheel of the first-level menu icon; and (c) in response to an activation input, displaying a second-level menu icon on the screen, the second-level menu icon depicting a three-dimensional wheel having a side face divided into one or more side sections, each side section displaying a menu item, one of the menu items being indicated as a currently selected menu item, wherein the menu items displayed in the second-level menu icon are determined by a menu tree and the menu item that was selected in the first-level menu icon.

The present invention also provides a method for adjusting a configuration parameter of a display apparatus using on-screen display, which includes: displaying a bar having a fixed length divided into two segments; displaying an indicator at a fixed position along the bar based on a currently stored value of the configuration parameter; changing the lengths of the two segments in response to a first user input, the lengths of the two segments representing an adjusted value of the configuration parameter; and storing the adjusted value of the configuration parameter in response to a second user input.

It is to be understood that both the foregoing general description and the following detailed description are exemplary and explanatory and are intended to provide further explanation of the invention as claimed.

### BRIEF DESCRIPTION OF THE DRAWINGS

Figure 1 shows a television screen with a top-level menu icon of the OSD according to an embodiment of the present invention.
Figure 2 is an enlarged view of the top-level menu icon of Fig. 1.
Figure 3 shows another example of the top-level menu icon of the OSD.
Figures 4A and 4B show a top-level menu icon and a second-level menu icon according to an embodiment of the present invention.
Figure 5 shows a display for adjustment a brightness parameter according to an embodiment of the present invention.
Figure 6A, 6B and 6C show top-level and second-level menu icons and a display for color temperature adjustment according to an embodiment of the present invention.
Figure 7 illustrates a dialog box for setting configuration parameters according to an embodiment of the present invention.

### DETAILED DESCRIPTION OF THE PREFERRED EMBODIMENTS

Embodiments of the present invention provides an on-screen display (OSD) method that displays configuration menus in a visually simple manner. The display primarily uses icons to represent menu items. The icons are placed near an edge or corner of the screen to minimize the safe action area of the screen obscured by the OSD. The menu items are logically organized into a menu tree structure having different menu levels, where each menu item either represents a group of menu items at the next level, or one or more configuration parameters to be adjusted (referred to as a leaf in the menu tree). At each level, only a few (e.g., three) menu items are displayed at once. The display scrolls to other menu items at the same level in response to user input. When the user activates a selected menu item, the OSD changes the display based on the menu tree structure.

Although a television apparatus is used as an example in the descriptions below, the OSD method is also applicable to a computer monitor, a display of a portable DVD player, or other display devices. The user interacts with the OSD using a control device which may be a remote control device, control keys on the front panel of the display, keys on a computer keyboard, etc. A remote control typically has four arrow keys, a Menu key, an Enter key, numeric keys, and a number of other keys. The functions of the particular keys described in the embodiments are merely exemplary; the key assignments should be intuitive and consistent with customary usage, but the particular key assignments described here are not a limiting feature of the present invention.

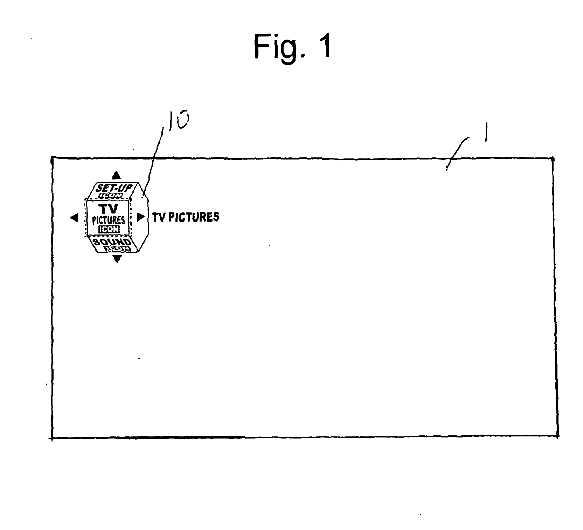

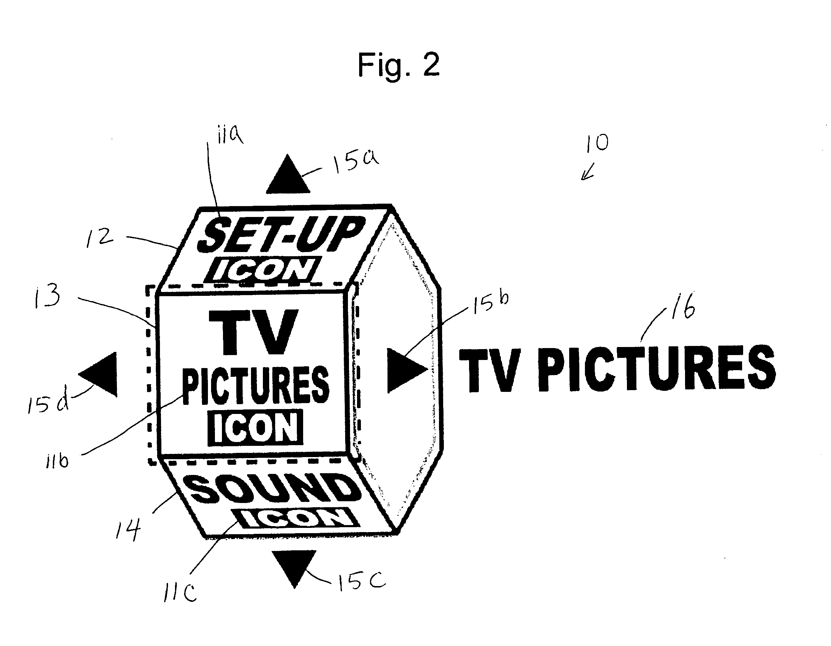

Fig. 1 shows a television screen 1 where a top-level menu icon 10 of the OSD is displayed in a corner of the screen. The top-level menu icon 10 is displayed when the user presses an appropriate key on the control device (e.g. a Menu key). As shown in the enlarged view in Fig. 2, the top-level menu icon 10 depicts a three-dimensional polygonal wheel having three visible side faces 12, 13 and 14, with three menu items 11a, 11b and 11c each represented by an icon rendered in a perspective view on one of the side faces. In the particular example shown in Fig. 1, the menu items are Setup 11a, TV Pictures 11b, and Sound 11c. The menu item displayed on the side face 13 of the wheel facing the viewer is the currently selected item. A border around the side face 13 or a different colored background may be used to indicate the currently selected menu item. Text 16 may be displayed adjacent the wheel to further identify the currently selected menu item. The top-level menu icon 10 includes a number of arrows 15a-d (four in this example), which indicate some of the user inputs allowed at this time. In this example, three types of inputs are allowed: scrolling the menu items by pressing the up or down arrow key, activating the currently selected item to go to the next level by pressing the left or right arrow key or the Enter key, and exiting the configuration menu by pressing the Menu key.

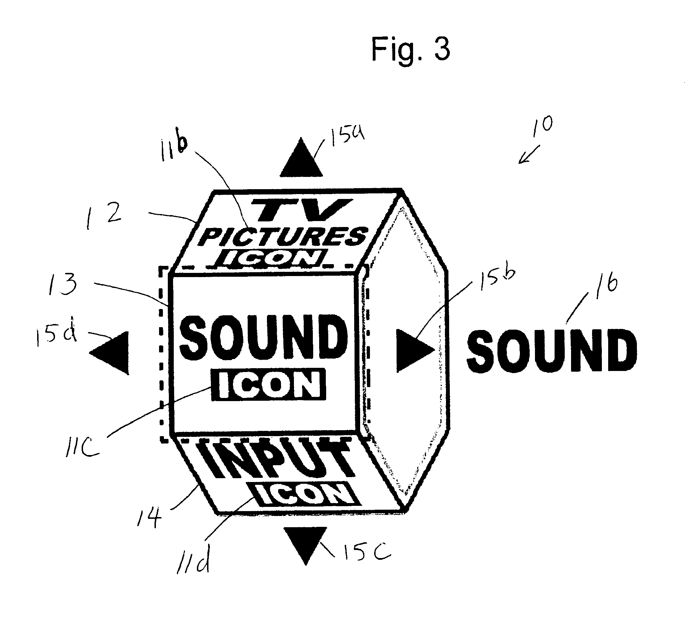

In response to the scrolling input (the up or down arrow key), the OSD changes the menu item displayed on each face 12, 13 and 14 of the wheel and brings new menu icons into the view. The scrolling simulates the effect of a rotation of the wheel by one position at a time in either direction, either animated or un-animated. For example, pressing the up arrow key from the top-level menu icon 10 shown in Fig. 2 would result in a menu icon 10 as shown in Fig. 3, where the menu item 11a (Setup) previously at position 12 is rotated out of the view, the menu item 11b (TV Pictures) previously at position 13 is now displayed at position 12, and a new menu item 11d (Input) is brought into view at position 14. How the menu items change in a scrolling is determined by the menu tree. Since the menu item displayed in the center position 13 is by definition the currently selected item, a scrolling action is in effect a selecting action.

In the example shown in Fig. 2, the polygonal wheel of the icon 10 has three visible faces on which icons representing menu items are displayed. This allows the currently highlighted menu item to be displayed at the center with one additional menu items on each side to help the user scroll to the next items. More menu items may be displayed, such as five (two additional menu items on each side of the currently highlighted one, displayed on five visible sides of the wheel), but displaying too many items at once tends to confuse and overwhelm the user. It is also possible for the wheel to have only one or two side faces or to display fewer menu items by leaving some faces blank. Further, although a polygonal wheel is shown in Figs. 1-3 and subsequent figures, the wheel may also be a circular wheel. In such a case, the curved side face of the circular wheel may be divided into one or more side sections each for displaying one menu item icon, and the menu item icons can be scrolled up and down similar to the case of a polygonal wheel.

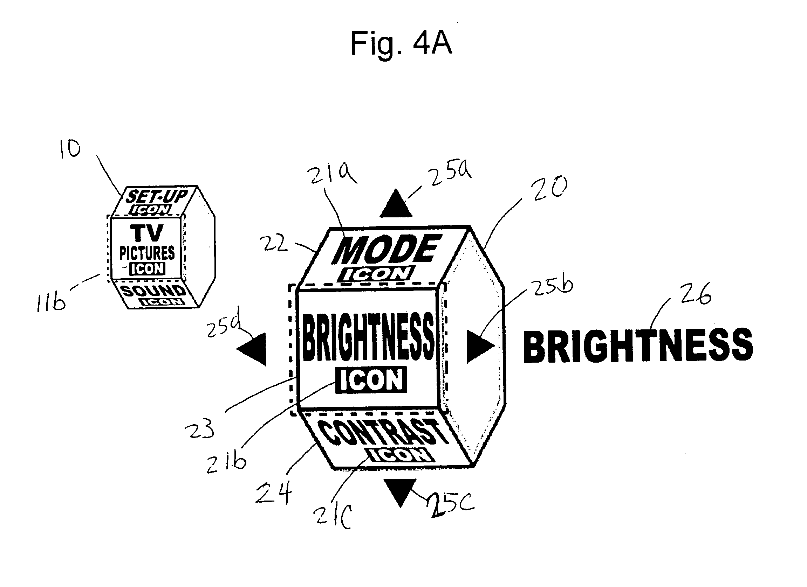

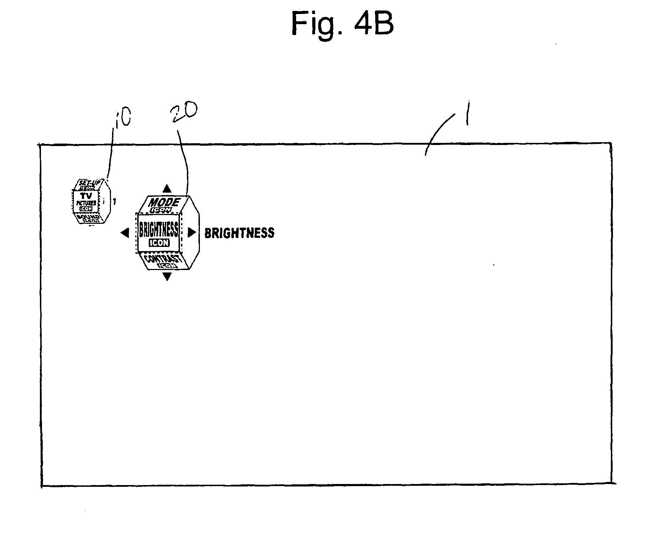

When the user activates the currently selects menu item (at position 13) of the top-level menu 10 with an activation input (the left or right arrow key or the Enter key), the OSD changes to a different display based on the menu tree structure. If the activated menu item corresponds to several next level menu items as defined by the menu tree, a next-level (second-level) menu icon 20 similar to the top-level menu icon 10 is displayed, as shown in Figs. 4A and 4B. Preferably, a reduced-size version of the previous level menu icon 10 (now without the arrows 15a-d) is displayed on the screen adjacent the second-level menu level icon 20 to indicate the logical relationship between the two levels of menu items. As shown in Fig. 4A, the second-level menu icon 20, which is displayed when the user activates the TV Pictures item 11b on the top-level menu 10, is similar to the top-level icon 10 in that it depicts a three-dimensional polygonal wheel having three visible side faces 22, 23 and 24 with three menu item icons 21a, 21b and 21c rendered in a perspective view on the three side faces. A number of arrows 25a-d (four in this case) in the second-level icon 20 indicate the allowable user actions. Here, again, three types of inputs are allowed: pressing the up or down keys (scrolling input) will scroll the menu items on the menu icon 20 up and down; pressing the left or right arrow key or the Enter key (activation inptu) will activate the currently selected menu item (at position 23) and cause the OSD to go to the next display according to the menu tree structure; and pressing the Menu key will return the OSD to the previous-level menu 10.

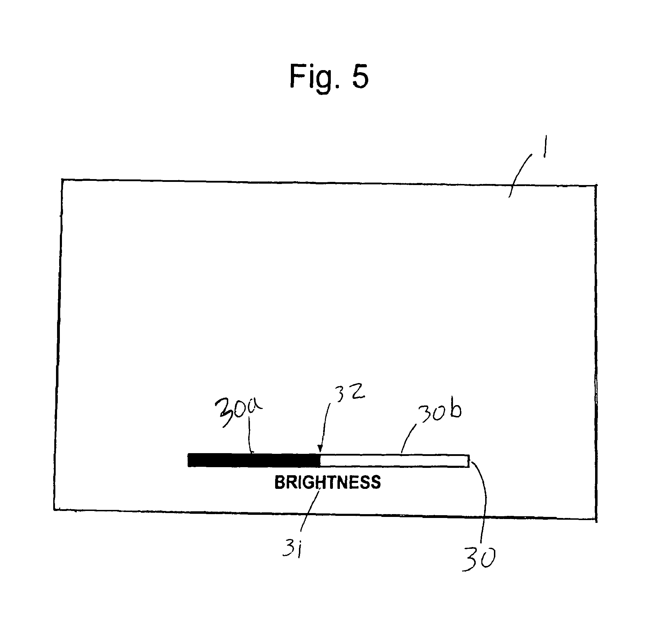

At any given level of the menu display, if the activated menu item represents one or more configuration parameters to be adjusted (i.e. a leaf in the menu tree), the OSD presents an input display to prompt the user to enter or change the values of the parameter(s). The input display may have a variety of forms depending on the nature of the configuration parameter(s) to be adjusted. For example, Fig. 5 shows a bar 30 and associated text 31 (optional) that represent the Brightness parameter, displayed when the user activates the Brightness item 21b in the second-level menu icon 20 shown in Fig. 4A. An indicator 32 (an arrow in this example, but it may also be a short line or other suitable indicators) is displayed at a fixed position along the bar to represent the currently stored value of the brightness parameter, and stays unchanged while the user adjusts the brightness. The bar 30 has a fixed length and is divided into two segments 30a and 30b, preferably represented by different colors or transparencies, to visually represent the adjusted brightness value. When the user presses the left or right arrow keys to adjust the brightness, the lengths of the two segments change in response to indicate the adjusted brightness value. The adjustment is accepted and the new brightness value is stored in the television device when the user presses the Enter or Menu key. Such a bar-type input display is preferably used when the configuration parameter has a continuous or quasi-continuous range of values (e.g., from 0 to 100 in increments of 1). The input display may be displayed at locations on the screen different from the wheel icons. In the example shown in Fig. 5, the brightness bar 30 is a horizontal bar displayed near the bottom of the screen 1 to avoid the safe action area of the screen. Alternatively, the bar may be displayed near the top of the screen, or it may be a vertical bar and display near the left or right side of the screen. The bar may also be positioned at the center, but this would impact the safe action area. Also, as shown in Fig. 5, when the input display 30 is displayed, the top-level and next level menu icons 10, 20, etc. are preferably erased from the screen to reduce the area of the screen being obscured.

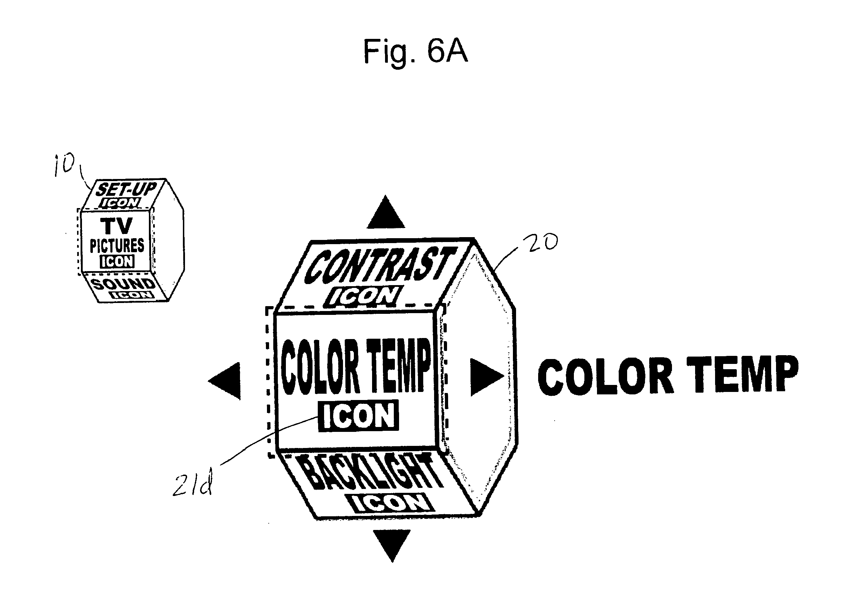

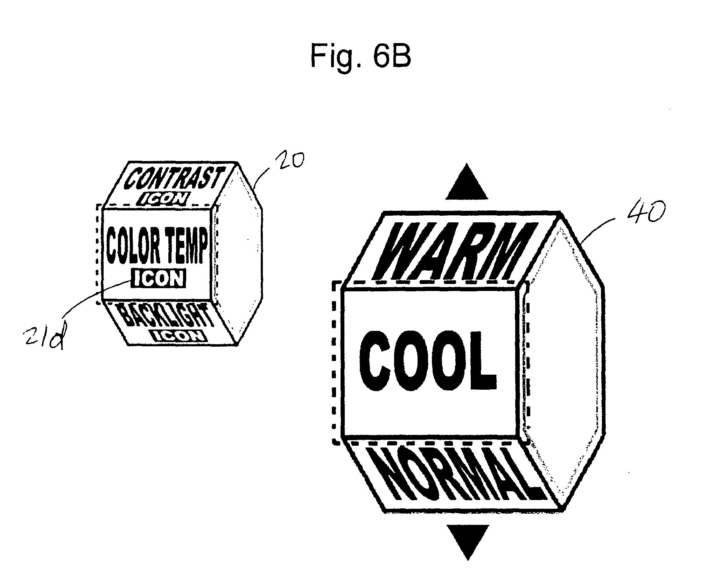

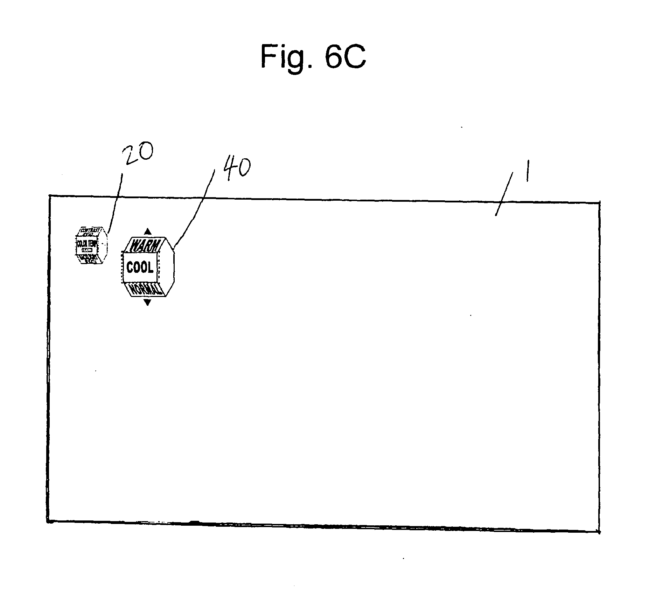

If the configuration parameter to be adjusted is one that takes one of a few possible values, the OSD may use an input selection icon having a wheel shape similar to the top-level menu icon 10 to adjust the parameter. Fig. 6B shows an input selection icon 40 for the Color Temperature parameter that allows the user to select the color temperature value of the screen, which may be Warm, Cool, or Normal in this example. The allowed values are shown as icons on the side face of the polygonal wheel, and can be scrolled and selected by using the appropriate keys on the control device. In this example, the Color Temperature input icon 40 is displayed when the user selects the Color Temperature menu item 21d on a second-level menu icon 20 shown in Fig. 6A. As shown in Figs. 6B and 6C, the Color Temperature input icon 40 is displayed together with the second-level menu icon 20 on the screen, but the top-level menu icon 10 is no longer displayed. This reduces the areas of the screen obscured by the icons. It also minimizes user confusion. Preferably, a maximum of two levels of menu icons are displayed at any time, even though a menu tree may have three, four or even more levels. In other words, when a third-level menu icon is displayed, a reduced-size version of the second-level is displayed but the first-level menu icon is erased.

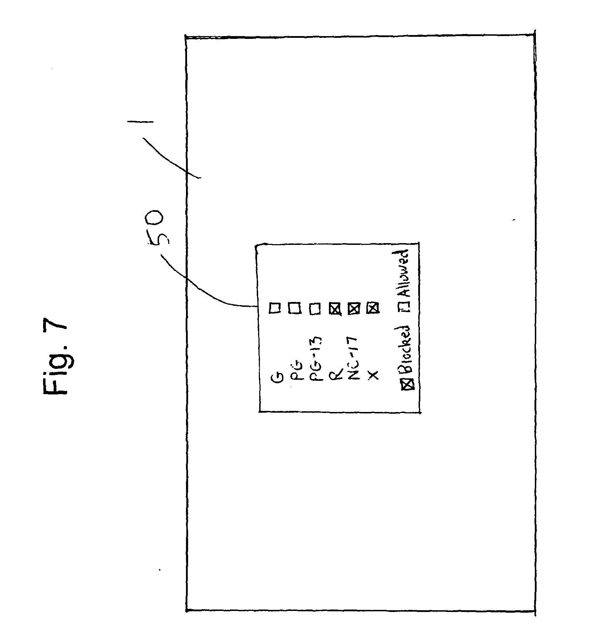

The input display may also be a dialog box that allows the user to check or uncheck boxes, input alphanumeric values, etc. Fig. 7 shows an example of a dialog box 50 which has check boxes for setting blocked contents based on MPAA rating. The user uses appropriate keys on the control device to change the setting of the parameters. After adjusting a configuration parameter, the user may press an appropriate key (e.g. Menu or Enter) on the control device to return to the previous menu level or exit the configuration process.

The OSD is intended to be displayed over images or programs being viewed, but it can also be displayed on a blank screen or background images. The images or programs may be provided by any suitable sources such as broadcast TV, cable TV, satellite TV, VCR, DVD, computer, etc.

The on-screen display method described above are preferably implemented by software or firmware running on a processor in the television apparatus or computer monitor. The menu tree structure and the configuration parameter values are stored in the television apparatus or computer monitor. The use of a remote control or front panel control as an input device is well known in the art and not described in detail here.

The OSD methods according to embodiments of the present invention have the following characteristics and advantages. The OSD uses primarily icons to visually represent the menu items, and the menu items are arranged in a spatial relationship that simulates a three-dimensional object, making the OSD visually engaging. Only a few menu items are included in the menu icon at a time to avoid confusing and overwhelming the user. Displaying only a few menu items at a time also makes the menu icon relatively small in size to minimize the screen area obscured by the OSD. When a lower lever menu icon is displayed, a reduced-size higher level menu icon is displayed along with it to indicate the logical relationship of the menus items, but only a limited number of levels (such as two) are displayed to minimize user confusion and overcrowding of the screen. Further, the OSD is additive in nature, rather than subtractive. In other words, the menu items displayed on a menu icon are only those that have meanings and can be selected by the user at that point of the menu tree. In a subtractive OSD, menu items are often displayed even when they cannot be selected and have to be "grayed out". These features make the OSD intuitive and easy to use; as a result, it may reduce the requirement for technical support and associated cost to manufacturers.

It will be apparent to those skilled in the art that various modification and variations can be made in the on-screen display method of the present invention without departing from the spirit or scope of the invention. Thus, it is intended that the present invention cover modifications and variations that come within the scope of the appended claims and their equivalents.

## Claims

1. A method for adjusting configuration parameters of a display apparatus using on-screen display, comprising:
(a) displaying a first-level menu icon on a screen of the display apparatus, the first menu icon depicting a three-dimensional wheel having a side face divided into one or more side sections, each side section displaying a menu item, one of the menu items being indicated as a currently selected menu item;
(b) in response to a scrolling input, displaying different menu items on the side sections of the wheel of the first-level menu icon; and
(c) in response to an activation input, displaying a second-level menu icon on the screen, the second-level menu icon depicting a three-dimensional wheel having a side face divided into one or more side sections, each side section displaying a menu item, one of the menu items being indicated as a currently selected menu item, wherein the menu items displayed in the second-level menu icon are determined by a menu tree and the menu item that was selected in the first-level menu icon.

2. The method of claim 1, wherein the first-level and second-level menu icons further include indicators that indicate allowable user inputs.

3. The method of claim 1, wherein the three-dimensional wheel depicted in the first-level and second-level menu icons are polygonal wheels having a side face divided into at least three side sections.

4. The method of claim 3, wherein in the first-level and second-level menu icons, each menu item is an icon representing the menu item rendered in perspective view on a side section of the polygonal wheel.

5. The method of claim 1, wherein the three-dimensional wheel depicted in the first-level and second-level menu icons are circular wheels.

6. The method of claim 1, wherein step (c) further comprises displaying a reduced-size version of the first-level menu icon adjacent the second-level menu icon.

7. The method of claim 6, further comprising:
(d) when both the first-level and second-level menu icons are displayed and a menu item of the second-level menu icon is currently selected, in response to an activation input, displaying a third-level menu icon, displaying a reduced-size version of the second-level menu icon, and erasing the first-level menu icon.

8. The method of claim 1, wherein the first-level and second-level menu icons are displayed in a corner or edge of the display screen.

9. The method of claim 1, further comprising:
(d) in response to an activation input, displaying an input display to prompt the user to enter or change the value of one or more configuration parameters.

10. The method of claim 9, wherein the input display includes an input selection icon depicting a three-dimensional wheel having a side face divided into one or more side sections, each side section displaying a possible value of the configuration parameter.

11. The method of claim 10, wherein the three-dimensional wheel depicted in the input selection icon is a polygonal wheel having a side face divided into at least three side sections, and wherein the input selection icon further includes indicators that indicate allowable user inputs.

12. The method of claim 9, wherein the input display includes a bar or a dialog box.

13. The method of claim 12, further comprising:
erasing the first and second menu icons from the screen with the bar or dialog box is displayed.

14. A method for adjusting a configuration parameter of a display apparatus using on-screen display, comprising:
displaying on a screen of the display apparatus a bar having a fixed length divided into two segments;
displaying an indicator at a fixed position along the bar based on a currently stored value of the configuration parameter;
changing the lengths of the two segments in response to a first user input, the lengths of the two segments representing an adjusted value of the configuration parameter; and
storing the adjusted value of the configuration parameter in response to a second user input.

15. The method of claim 14, wherein the two segments of the bar are displayed in different colors or transparencies.

16. The method of claim 14, wherein the indicator is an arrow.

17. A method for displaying configuration menus on a display screen, comprising:
(a) displaying a first plurality of menu item icons on the screen, one of the menu items being currently selected; and
(b) in response to a first user input, selecting a different menu item icon; and
(c) in response to a second user input, displaying a second plurality of menu item icons on the screen, wherein the second plurality of menu item icons are determined by a menu tree and the selected one of the first plurality of menu item icons.

18. A computer readable medium carrying computer readable program code means configured to control a computer to carry out a method according to any preceding claim.

19. An apparatus configured to carry out the method of any one of claims 1 to 17.
